# EUROPÄISCHE PATENTANMELDUNG

(11) **EP 3 792 227 A1**
(43) Veröffentlichungstag der Anmeldung: **17.03.2021**
(21) Anmeldenummer: 20195541.6
(22) Anmeldetag: 10.09.2020
(51) Int. Cl.: C03C 17/00, C03C 17/30

(54) **BESCHICHTUNGSMATERIAL ZUR HERSTELLUNG EINER EINSTUFIGEN VERGÜTUNG VON BEHÄLTERGLAS, DESSEN ANWENDUNG SOWIE DESSEN VERWENDUNG**

(30) Priorität: 12.09.2019 DE 102019124610
(71) Anmelder: Wiegand-Glashüttenwerke GmbH, 96361 Steinbach am Walld (DE); NANO-X GmbH, 66130 Saarbrücken (DE)
(72) Erfinder: Sepeur, Stefan, 66787 Wadgassen (DE); Frenzer, Gerald, 66130 Saarbrücken (DE); Großmann, Heiko, 07330 Probstzella (DE); Küpper, Thomas, 91564 Neuendettelsau (DE)
(74) Vertreter: Sperschneider, Alexandra

(57) **Zusammenfassung**

Die Erfindung betrifft Beschichtungsmaterial zur Herstellung einer einstufigen Vergütung von Behälterglas, dessen Anwendung sowie dessen Verwendung.

## Beschreibung

Die vorliegende Erfindung betrifft ein Beschichtungsmaterial zur Herstellung einer einstufigen Vergütung von Behälterglas, dessen Anwendung sowie dessen Verwendung.

### Hintergrund

In der Praxis ist es üblich, frischhergestellte Behältergläser zunächst mit einer Heißendvergütung vorzubehandeln. Diese Heißendvergütung basiert in der Regel auf Zinn- und/oder Titansalzen, welche auf das noch heiße, frischgeformte Rohglas aufgedampft werden, und sich in einer Oxidform abscheiden. Im Nachgang hierzu wird auf das Behälterglas eine Kaltendvergütung aufgebracht, für welche die in der Heißendvergütung aufgedampften Metalloxide als Haftvermittler fungieren.

Die Kaltendvergütung selbst dient der verbesserten Führung der Behältergläser während des Linientransports hin zu den Packstationen und/oder zu den Abfüllanlagen. Die Kaltendvergütungen erhöhen die Gleitfähigkeit der beschichteten Behältergläser, sodass sich ein Aufstauen in der Transportlinie verhindern lässt. Zudem kann die Kaltendvergütung auch einen Einfluss auf die Stabilität und Bruchfestigkeit der beschichteten Behältergläser ausüben. Besonders nachteilig an den bekannten Materialien und Verfahren aus dem Stand der Technik ist, dass stets eine Heißendvergütung benötigt wird, um die frisch geformten Behältergläser vorzubehandeln. Ohne diese Vorbehandlung ist es bisher nicht möglich, bekannte Kaltendvergütungmaterialien dauerhaft auf die Behälterglasoberflächen aufzubringen. Unter dauerhaft ist hierbei vorteilhaft zu verstehen, dass die Kaltendvergütungsbeschichtung auch im Mehrwegsystem Bestand hat und insbesondere Reinigungsvorgänge und Neubefüllungen übersteht. Allen bekannten Kaltendvergütungsbeschichtungen ist gemeinsam, dass diese die haftvermittelnde Heißendvergütung benötigen, um eine entsprechende Abriebstabilität sicherzustellen.

Genau hierin liegt der große Nachteil der aus dem Stand der Technik bekannten Beschichtungsmaterialien und Beschichtungsverfahren. Die frischgeformten Behältergläser durchlaufen direkt nach deren Ausformung die Heißendvergütung. In der Regel ist dieser Heißendvergütungsabschnitt als Verdampfungshaube ausgebildet, durch welche die frischgeformten Behältergläser in Reihe hindurchgeführt werden. Während dieser Durchführung wird das Heißendvergütungsmittel auf die Behälterglasoberfläche aufgedampft. Genau dieser Schritt erweist sich als hoch problematisch, da nahezu ausschließlich Titan- oder Zinnsalze hierfür verwendet werden. Insbesondere bei Letzteren hat es sich als vorteilhaft erwiesen, Monobutylzinntrichlorid (MBTC)zu verwenden, da dieses Material eine besonders gute Haftgrundlage für die folgende Kaltendvergütung ausbildet. Es hat sich nunmehr zudem herausgestellt, dass diese Zinnsalze hochgradig gefährlich für die Gesundheit sind und im Verdacht stehen Krebs zu erregen. Aufgrund der gängigen Bedampfungspraxis kann ein Kontakt mit dem Heißendvergütungsmittel und dem Maschinenführer selten ausgeschlossen werden. Zudem kommen geplante Anpassungen an EU-Richtlinien in Betracht, welche möglicherweise die Verwendung von Zinn- und/oder Titanverbindungen in der Heißendvergütung gänzlich verbieten werden.

### Aufgabe

Daher liegt der vorliegenden Erfindung die Aufgabe zugrunde, ein Beschichtungsmaterial bereitzustellen, welches unter Verzicht der Heißendvergütung auf Behälterglasoberflächen aufgebracht werden kann, sodass deren Gleiteigenschaften und/oder Bruchstabilitäten und/oder deren Etikettiereigenschaften beibehalten oder sogar verbessert werden können. Weiterhin ist es Aufgabe der vorliegenden Erfindung ein Beschichtungsmaterial bereitzustellen, welches in unverarbeiteter Form eine hohe Lagerfähigkeit und chemische Beständigkeit aufweist, welches äußerst kostengünstig herstellbar ist und welches auf herkömmlichen, sich bereits in der Benutzung befindenden Kaltendbeschichtungsanlagen direkt eingesetzt werden kann. Weiterhin ist es Aufgabe der vorliegenden Erfindung ein Verfahren bereitzustellen, welches direkt auf herkömmlichen Kaltendbeschichtungsanlagen durchgeführt werden kann, ohne dass es hierfür Umbauten oder Neukonstruktionen bedarf. Weiterhin ist es Aufgabe der vorliegenden Erfindung giftige Substanzen im Glasherstellungsbereich zu ersetzen und selbst umweltökologisch positiv ausgebildet zu sein, so dass die Erfindung besonders energiesparsam, kostensparsam und gesundheitlich unbedenklich für die benutzenden Personen verarbeitet und eingesetzt werden kann. Weiterhin ist es Aufgabe der vorliegenden Erfindung ein Verfahren zur Herstellung bereitzustellen, welches besonders einfach, schnell, energiesparsam und gesundheitlich unbedenklich für die benutzenden Personen durchgeführt wird.

### Lösung

Der Kerngedanke der vorliegenden Erfindung besteht darin, ein Einstufenbeschichtungsmaterial für heißendvergütungsfreie Behälterglasoberflächen, enthaltend wenigstens ein einfach- und/oder mehrfachfunktionalisiertes Silan, bereitzustellen. Mit der hier erstmals beschriebenen Einstufenbeschichtungsmaterialzusammensetzung ist erstmals möglich, auf den Schritt der Heißendvergütung in der Behälterglasherstellung vollständig und ersatzlos zu verzichten. Das hier erstmals beschriebene Einstufenbeschichtungsmaterial benötigt keine haftvermittelnde Zinn- und/oder Titanoxidschicht auf den frischgeformten Behältergläsern. Somit hat das hier erstmals beschriebene Einstufenbeschichtungsmaterial den Vorteil, dass auf das hochgradig gesundheitsgefährdende Monobutylzinntrichlorid oder auch andere Zinn- und/oder Titansalze rückstandslos verzichtet werden kann. Dies erhöht signifikant die Arbeitsplatzverbesserung für den Maschinenführer. Gleiches gilt für weitere Glasoberflächen und/oder weitere Oberflächen, beispielsweise aus Porzellan, Steingut, Keramik und dgl. Die Anwendung des hier erstmals beschriebenen Einstufenbeschichtungsmaterials als Oberflächenbeschichtung ist besonders für Behältergläser von Vorteil, allerdings auch nicht auf diese beschränkt. Das hier beschriebene Einstufenbeschichtungsmaterial kommt gänzlich ohne Haftvermittler aus. Es ist daher erstmals möglich, sowohl auf die Heißendvergütung als auch auf sonstige Haftvermittler, welche in einem Vorschritt auf die zu beschichtende Oberfläche, beispielsweise eine Flasche, aufgebracht werden, zu verzichten. Mit dem hier beschriebenen Einstufenbeschichtungsmaterial ist es erstmals möglich, insbesondere Behältergläser in nur einem einzigen Schritt nach Verlassen der Kavitäten zu vergüten, sodass diese nach Abkühlung direkt verpackt werden können. Mit dem hier beschriebenen Einstufenbeschichtungsmaterial sind weitere Nachbehandlungsschritte, wie beispielsweise Tempern, Aufwärmen oder Beaufschlagen mit Lichtstrahlungsquellen, wie beispielsweise UV-Strahlung, hinfällig und vollkommen unnötig. Derartige Schritte sind stets mit hohen Kosten für die entsprechende Anlagentechnik als auch für die verbrauchte Energie verbunden. Insbesondere im Rahmen des "grünen Gedankens" weist das hier beschriebene Einstufenbeschichtungsmaterial den besonderen Vorteil auf, dass dieses nach der Aufbringung auf die zu vergütende Oberfläche allein durch die Restwärme dieser Oberfläche chemisch reagiert und thermisch aushärtet, thermisch verfestigt oder sich thermisch kratzfest vernetzt. Somit kann erstmals ein Einstufenbeschichtungsmaterial bereitgestellt werden, welches dem "grünen Gedanken" in der Glasindustrie gerecht wird und welches bei Verwendung auch ein entsprechend "grünes" Herstellungsverfahren ermöglicht. Das Einstufenbeschichtungsmaterial zeichnet sich auch dadurch aus, dass dieses für Menschen gesundheitlich unbedenklich ist, wodurch die Arbeitsplätze der Angestellten, auch für Neuzugänge, deutlich attraktiver werden. Darüber hinaus ist das Beschichtungsverfahren unter Verwendung des hier beschriebenen Einstufenbeschichtungsmaterials aus umweltökologischer Sicht besonders von Vorteil, da es unter Energieeinsparung eine deutlich erhöhte Effizienz ermöglicht, als es mit den herkömmlichen Zweistufenbeschichtungsverfahren überhaupt möglich wäre. Durch den Verzicht auf die bisher bekannte toxische Heißendvergütung können die Behältergläser direkt mit Austritt aus den Kavitäten der Kaltendvergütungslinie zugeführt werden, wodurch die Behältergläser vorteilhaft noch eine höhere Restwärme aufweisen, als wenn diese vorher noch die Heißendvergütung durchlaufen müssen. Folglich kann die höhere Restwärme durch das hier beschriebene Einstufenbeschichtungsmaterial genutzt werden, wodurch dessen physikalische und/oder chemische Eigenschaften im getrockneten und/oder ausgehärteten Zustand signifikant verbessert werden.

Das vorteilhaft eingesetzte wenigstens eine einfach und/oder mehrfach funktionalisierte Silan kann vorteilhaft wenigstens einen, vorteilhaft zwei oder mehrere Reste aufweisen, welche gleich oder verschieden zueinander ausgebildet sind. Vorteilhaft bildet der wenigstens eine Rest die Einfach- und/oder Mehrfachfunktionalisierung des wenigstens einen Silans aus.

Weiterhin vorteilhaft ist die Funktionalisierung des wenigstens einen- und/oder mehrfachfunktionalisierten Silans als Alkoxygruppe, Aryloxygruppe, Acetoxygruppe und/oder Kombinationen hieraus ausgewählt. Weiterhin hat es sich als vorteilhaft erwiesen, dass das Einstufenbeschichtungsmaterial weiterhin wenigstens eine Phenylgruppe, Alkylgruppe und/oder Kombinationen hieraus aufweist. So hat es sich als besonders vorteilhaft erwiesen, das wenigstens eine Silan aus der Gruppe Alkoxysilane, Acetoxysilane, Aryloxysilane und/oder Kombinationen hieraus auszuwählen. Ganz besonders vorteilhaft haben sich hierbei insbesondere Ethoxygruppen und/oder Methoxygruppen erwiesen, welche das funktionalisierte Silan aufweisen kann. Dies schaffen die einfachste Applizierbarkeit und beste Langzeitstabilität im Anwendungsfall. Vorteilhaft können mehrere Ethoxygruppen und/oder Methoxygruppen pro Silan vorgesehen sein. Besonders stabile Vergütungen haben sich ergeben, wenn das funktionalisierte Silan aus der Gruppe Glycidyloxypropyltriethoxysilan, Glycidyloxypropyltrimethoxysilan, Methyltriethoxysilan, Tetraethoxysilan, Vinyltriethoxysilan, Vinyltrimethoxysilan, Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, Aminopropyltriethoxysilan, n-(2-aminoethyl)-3-aminopropyltriethoxysilan, Aminopropyltrimethoxysilan, n-(2-aminoethyl)-3-aminopropyltrimethoxysilan n-Propyltrimethoxysilan, Cyclohexylmethyldimethoxysilan, Dimethyldimethoxysilan, Diisopropyldimethoxysilan, Phenylimethyldimethoxysilan, Phenylethyltriethoxysilan, Phenyltriethoxysilan, Phenylmethyldiethoxysilan und Phenyldimethylethoxysilan, Octyltriethoxysilan, Octyltrimethoxysilan, Hexadecyltrimethoxysilan, Hexadecyltriethoxysilan und/oder Kombinationen hieraus ausgewählt ist. Aus dieser Gruppe haben sich besonders vorteilhaft Methyltriethoxysilan, Methyltrimethoxysilan Cyclohexyltrimethoxysilan, Cyclopentyltrimethoxysilan, Ethyltrimethoxysilan, Phenylethyltrimethoxysilan, Phenyltrimethoxysilan, n-Propyltrimethoxysilan, n-Propyltriethoxysilan, Cyclohexylmethyldimethoxysilan, Dimethyldimethoxysilan, Diisopropyldimethoxysilan, Phenyldimethyldimethoxysilan, Phenylethyltriethoxysilan, Phenyltriethoxysilan, Phenylmethyldiethoxysilan und Phenyldimethylethoxysilan, Octyltriethoxysilan, Octyltrimethoxysilan, Hexadecyltrimethoxysilan, Hexadecyltriethoxysilan und/oder Kombinationen hieraus erwiesen. All den hier genannten Silanen ist gemeinsam, dass sie besonders vorteilhafte Hafteigenschaften für die spätere Etikettierung und Bebügelung sowie zudem hervorragende Lebensmittelverträglichkeit aufweisen. Hinzu kommt die einfache Applizierbarkeit auf die restwarmen Behälterglasflächen, so dass mit den hier beschriebenen Silanen erstmals eine besonders schnelle, einfache und untoxische Vergütung für Oberflächen, insbesondere Behälterglasoberflächen, bereitgestellt werden kann.

Weitere vorteilhafte Ausführungsformen ergeben sich aus den Unteransprüchen.

Weiterhin ist im Einstufenbeschichtungsmaterial vorteilhaft wenigstens ein Tensid enthalten. Hierbei hat es sich als vorteilhaft erwiesen, wenn das wenigstens ein Tensid aus der Gruppe von Estern mit wenigstens einer Phenolgruppe und/oder von Ethern mit wenigstens einer Phenolgruppe ausgewählt ist. Die Ladung des wenigstens einen aus der vorstehenden Gruppe ausgewählten Tensids kann anionisch oder nicht-ionisch ausgebildet sein. Das Vorsehen wenigstens eines Tensids im hier beschriebenen Einstufenbeschichtungsmaterial hat sich als vorteilhaft erwiesen, um die Benetzungseigenschaften auf den Glasflächen und/oder Keramik-, Porzellan- Steingutflächen zu optimieren. Besonders vorteilhaft wird das wenigstens eine Tensid im Verhältnis zum Einstufenbeschichtungsmaterial im Bereich von 1:99 bis 1:1, vorteilhafter von 1:99 bis 1:4 bezogen auf die Gesamtmasse des herzustellenden Gemisches gewählt. Allerdings sind auch geringere resultierende Tensidkonzentrationen im Bereich von 0,1 bis 15 Gew.% bezogen auf die Gesamtmasse des herzustellenden Gemischs denkbar. Weiterhin hat sich gezeigt, dass Tensidzugaben im Bereich von 2 Gew.% bezogen auf die Gesamtmasse des herzustellenden Gemischs, 2,5 Gew.% bezogen auf die Gesamtmasse des herzustellenden Gemischs, 3 Gew.% bezogen auf die Gesamtmasse des herzustellenden Gemischs und 3,5 Gew.% bezogen auf die Gesamtmasse des herzustellenden Gemischs vorteilhaft sind, da sich bei dieser Zugabe besonders homogene und langzeitstabile Emulsionen erzeugen lassen, welche im verarbeiteten Zustand, also im aufgebrachten und verfestigten und/oder ausgehärteten Zustand auf der zu vergütenden Glasoberfläche, eine besonders hohe Kraftfestigkeit und Gleitfähigkeit aufweisen. Das wenigstens eine Tensid kann aus der Gruppe

| Kommerzieller Name | Chem. Verbindung | IUPAC |
|---|---|---|
| Arkopal® N-Typen | 4-Nonylphenyl-polyethylene glycol | 9016-45-9 |
| Walliphos® NOP 90 | Nonylphenol -9- polyglykoletherphosphorsäureester | 51811-79-1 |
| Walliphos® NODP 60 | Alkylphenol polyglycolether phosphoric acid ester | 51811-79-1 |
| Walloxen® NO-Typen | Nonyl phenol polyglykolether | 9016-45-9 |
| Tergitol™ NP-40 | α-(4-Nonylphenyl)-ω-hydroxy-poly(oxy-1,2-ethanediyl) branched | 127087-87-0 |
| Disponil® AES-Typen | Alkyl aryl polyglycol ether sulphate | |
| Sermul® EA-Typen | | 51609-41-7 (Sermul EA 211) 68891-39-4 (Sermul EA 146, Sermul EA 151) Sermul EA 266 |
| Emulphor® NPS 25 | Nonylphenol polyglycol ether sulphate sodium salt | |
| Emulphor® OPS 25 | Octylphenol polyglycol ether sulphate sodium salt | 55348-40-8 |
| Genapol® PF-Typen | | 9003-11-6 (Genapol PF, Genapol PF 10, Genapol PF 80, Genapol PF 20) 106392-12-5 (Genapol PF 40) |
| Servoxyl® VPGZ 6/100 | | 39464-70-5 |
| Servoxyl® VPNZ 9/100 | | 68412-53-3 |
| Hostaphat® KW 340 D | Triceteareth-4 Phosphate | 119415-05-3 |
| Lucramul® 1820 Liq. | "Special fatty alcohol ethoxylate" | |
| Triton® X-Typen | 4-(1,1,3,3-Tetramethylbutyl)phenyl-polyethylene glycol, *t*-Octylphenoxypolyethoxyethanol, Polyethylene glycol *tert*-octylphenyl ether | 9002-93-1 (Triton™ X-100) |
| Borchi® Gen 0650 | | |
| Borchi® Gen AP | Phosphonic acid ester based | |
| Borchi® Gen ND | 2-(2-Butoxyethoxy)ethyl dihydrogen phosphate, compound with N,N-dimethylcyclohexylamine | 94200-24-5 (Borchi® Gen ND plus) |
| Genapol® X-Typen | | 9043-30-5 (Genapol® X-080, Genapol® X-100) |
| Emulan® ES 9880 | | |
| C | Alkylphenol ethoxylate | 68412-54-4 (Branched alkylphenol ethoxylate) |
| Emulan® NP 3070 | | |
| Chemax® NP-Typen | POE (6) nonyl phenol | 9061-45-9 (Chemax® NP-6) |
| Chemax® OP-10 | POE (10) Octyl Phenol | 9036-19-5 |
| Chemfac® PB -Typen | POE Aliphatic | 9046-01-9 (Chemfac® PB-136, Chemfac® PB-139) 39464-69-2 (Chemfac® PB-184) |
| | | 68071-17-0 (Chemfac® PB-106K) 68071-35-2 (Chemfac® PB-253) 68511-37-5 (Chemfac® PB-264) 67989-06-4 (Chemfac® PB-063, Chemfac® PB-082) |
| Chemfac® PN-322 | Aromatic | 72283-31-9 |
| Byk348 | Silikontensid / Polyethermodifiziertes Siloxan | |

ausgewählt sein. Je nach Ausführung ist denkbar, lediglich ein einziges Tensid aus der Liste einzusetzen. Es ist aber auch denkbar, dass Kombinationen aus zwei oder mehreren Tensiden eingesetzt und in dem Einstufenbeschichtungsmaterial enthalten sind.

So hat es sich bei der Verwendung wenigstens eines Tensids aus der o.g. Liste gezeigt, dass die Etikettenkleber, welche vor, zum oder nach dem Abfüllen auf die Behältergläser aufgebracht werden, besonders gleichmäßig aufgebracht werden können und weiterhin hervorragende Hafteigenschaften zu der Vergütung, also dem aufgebrachten Einstufenbeschichtungsmaterial, einerseits und zu den Etiketten andererseits ausbilden. Es hat sich gezeigt, dass besonders Caseinkleber, Dextrinkleber oder auch Stärkekleber und/oder Mischungen hieraus einfach, gleichmäßig und schnell auf das mit dem Einstufenbeschichtungsmaterial beschichteten Behälterglas aufgebracht werden können. Somit schafft das Einstufenbeschichtungsmaterial auf dem Behälterglas neben den vorteilhaften Eigenschaften zur Innendruckfestigkeit und Bruchsicherheit zugleich noch einen stabilen Haftgrund für den aufzutragenden Etikettenkleber. Weiterhin hat sich das hier beschriebene Einstufenbeschichtungsmaterial als vorteilhaft erwiesen, dass neben den Etikettenkleber auch aufzubringende Farben und Lacke direkt haften. So hat es sich beispielsweise gezeigt, dass auf Behälterglasflaschen, auf welchen das hier erstmals beschriebene Einstufenbeschichtungsmaterial aufgebracht ist, Farben und/oder Lacke in flüssig oder fester Form, direkt appliziert werden können und eine gleichmäßige Benetzung bzw. Materialverteilung auf der beschichteten Fläche stattfindet. Dies ist insbesondere dann von Vorteil, wenn beispielsweise Getränkeflaschen oder Haushaltsglaswaren einen Satineffekt aufweisen sollen und gerade keine chemische Ätzung gewünscht ist. In diesem Fall werden Kunststofflacke auf die Glasflächen aufgetragen, beispielsweise gesprüht. Mit dem hier beschriebenen Einstufenbeschichtungsmaterial kann auf den bisher notwendigen Schritt der Beflammung vollständig verzichtet werden. Dieser Schritt war bei Behältergläsern bisher immer notwendig, um die aufzutragenden Farblacke auch stabil applizieren und vernetzen zu können. Das hier beschriebene Einstufenbeschichtungsmaterial schafft eine Oberfläche, auf welche Farben und Lacke direkt haften, gleichmäßig spreiten und/oder homogene Oberflächen zum Vernetzen und/oder Aushärten ausbilden.

Bei einer weiteren vorteilhaften Ausführungsform ist denkbar, das Beschichtungsmaterial zusätzlich und/oder alternativ zu dem wenigstens einen funktionalisierten Silan, wenigstens ein Silanacetat enthaltend auszubilden. Im einfachsten Fall kann die Funktionalisierung des Silanacetats weiterhin und/oder alternativ zu der bereits oben beschriebenen Funktionalisierung aus wenigstens einer Acetylgruppe und/oder wenigstens einer Acetoxygruppe ausgebildet sein.

Insbesondere das Vorsehen von wenigstens einer Acetatgruppe als funktionalisierte Gruppe wenigstens eines Silans, hat sich als vorteilhaft erwiesen, da hierdurch die Ladung und auch die Polarität des Beschichtungsmaterials einstellbar ist. Weiterhin werden die Hafteigenschaften des Beschichtungsmaterials gegenüber der heißendvergütungsfreien Behälterglasoberfläche signifikant verbessert. Es hat sich überraschenderweise gezeigt, dass sich Silane mit wenigstens einer Acetat enthaltenden Gruppe als wenigstens ein Rest mit erhöhter Temperatur von 50 bis 200 °C, noch vorteilhafter im Bereich von 80 bis 140°C in die Anhydridform wechseln und hierbei Siliziumdioxid freigesetzt wird. Hierdurch wird dann eine besonders stabile Oberflächenbeschichtung der Behältergläser ermöglicht, welche zugleich stabile Gleitoptimierung, Etikettenhaftung und dergleichen aufweist, als es mit Kaltendvergütungsbeschichtungen aus dem Stand der Technik möglich und bekannt ist.

Es hat sich als besonders vorteilhaft erwiesen, dass ein und/oder zwei Acetatgruppen und/oder Acetoxygruppen pro Silanmolekül angeordnet sind. Mit dieser Funktionalisierung können besonders stabile Beschichtungsergebnisse erzeugt werden. Dies ist selbstverständlich nicht begrenzend zu verstehen, sodass es auch denkbar ist, weitere Carbonsäuregruppen anstelle und/oder ergänzend der Acetatgruppe am Silan einzubringen. Beispielsweise können diese Funktionalisierungsgruppen aus der Acyloxygruppe ausgewählt sein. Vorteilhaft ist wenigstens eine Acyloxygruppe direkt mit dem Siliziumatom des Silans verbunden. Dieses kann dann vorteilhaft als acyloxyfunktionalisiertes Silan bezeichnet werden. Vorteilhaft kann der an der Gruppe angehängte Alkyrest mit C1, C2, C3, C4, C5, C6, C7, C8, C9, C10, C11, C12, C13, C14, C15, C16, C17, C18, C19 oder C20 ausgebildet sein, da sich die besten Reaktivität bei der Aushärtung und/oder Vernetzung gezeigt haben.

Darüber hinaus hat es sich als vorteilhaft erwiesen, ein Gemisch aus funktionalisiertem Silan mit wenigstens einer Alkoxygruppe und/oder Aryloxygruppe einerseits und einem acyloxyfunktionalisierten Silan andererseits als Einstufenbeschichtungsmaterial bereitzustellen. Als besonders vorteilhaft haben sich Mischungsverhältnisse von 1:1 bis 1:0,1, beispielsweise 1:1, 1:0,9, 1:0,7, 1:0,6, 1:0,5, 1:0,4, 1:0,3, 1:0,2 und/oder 1:0,1 ergeben. Die Mischungsverhältnisse beziehen sich auf Gewichtsprozent. Mit derartigen Mischungsverhältnissen können überraschenderweise besonders langlebige Beschichtungen für Glasflächen, insbesondere Behälterglasflächen, oder auch für Porzellan-, Steingut oder Keramikflächen bereitgestellt werden, welche auch das Mehrwegverfahren überdauern.

Bei einer weiteren vorteilhaften Ausführungsform ist es auch denkbar, das wenigstens eine funktionalisierte Silan und/oder wenigstens eine Silanacetat bereits vorhydrolysiert in dem Einstufenbeschichtungsmaterial vorzuhalten. Mit diesem Vorschritt kann die Reaktionsfähigkeit des Silans nochmals erhöht werden, sodass bereits geringere Oberflächentemperaturen der Glasflächen ausreichen, um die entsprechenden stabilen Beschichtungen ausbilden zu können und die hierzu notwendigen Reaktionen energetisch anzuregen. Eine derartige Vorhydrolysierung kann beispielsweise durch Zugabe von wenigstens einer Säure aus der Gruppe Salpetersäure, Phosphorsäure, Methansulfonsäure, Toluolsulfonsäure, Schwefelsäure, Salzsäure, Ameisensäure, Essigsäure und/oder Trifluoressigsäure und/oder durch deren Gemische durchgeführt werden. Um besonders stabile Einstufenbeschichtungen auf Glasoberflächen auszubilden, hat es sich als vorteilhaft erwiesen, das Verhältnis von wenigstens einem funktionalisierten Silan und/oder funktionalisierten Silangemisch im Bereich von 99:1 bis 50:50 bezogen auf die Gesamtmasse des herzustellenden Gemisches ist, besonders vorteilhaft im Bereich von 95:5 bis 75:25, noch vorteilhafter von 95:5, 90:10, 85:15, 80:20, 75:25 bezogen auf die Gesamtmasse des herzustellenden Gemisches auszubilden. Im einfachsten Fall kann die Vorhydrolyse vorteilhaft durch Zugabe von verdünnten, wässrigen Säuren erfolgen, beispielsweise 1% HCl, 1% H₂SO₄, 1 % H₃PO₄, 1% Essigsäure, 1 % Ameisensäure und dergleichen. Besonders effektive Säurekonzentrationen liegen vorteilhaft im Bereich zwischen 0,05 und 5%ig, und noch vorteilhafter im Bereich von 0,5-2%ig. In diesem Konzentrationsbereich haben sich die effektivsten Vorhydrolysierungen ergeben, welche auch lange Zeit, vorteilhaft über mehrere Wochen und Monate, lagerbeständig sind.

Bei einer weiteren vorteilhaften Ausführungsform ist es denkbar, dass weiterhin Nanopartikel im Beschichtungsmaterial enthalten sein können. Weiterhin vorteilhaft werden anorganische Nanopartikel eingesetzt. Vorteilhaft können die Nanopartikel als Feststoff und/oder als entsprechende Dispersion zugegeben werden. Vorteilhaft können die Nanopartikel weiterhin als Kieselsol zugefügt sein. Besonders vorteilhaft werden die Nanopartikel als amorphes Siliziumdioxid und/oder auf Aluminiumoxidbasis mit einer durchschnittlichen Partikelgröße von 1 nm bis 500 nm, noch vorteilhafter von 20 bis 100 nm, noch vorteilhafter von 20nm, 21nm, 22nm, 23nm, 24nm, 25nm, 26nm, 27nm, 28nm, 29nm, 30nm, 31nm, 32nm, 33nm, 34nm, 35nm, 36nm, 37nm, 38nm, 39nm, 40nm, 41nm, 42nm, 43nm, 44nm, 45nm, 46nm, 47nm, 48nm, 49nm, 50nm, 51nm, 52nm, 53nm, 54nm, 55nm, 56nm, 57nm, 58nm, 59nm, 60nm, 61nm, 62nm, 63nm, 64nm, 65nm, 66nm, 67nm, 68nm, 69nm, 70nm, 71nm, 72nm, 73nm, 74nm, 75nm, 76nm, 77nm, 78nm, 79nm, 80nm, 81nm, 82nm, 83nm, 84nm, 85nm. 86nm, 87nm, 88nm, 89nm, 90nm, 91nm, 92nm, 93nm, 94nm, 95nm, 96nm, 97nm, 98nm, 98nm, 99nm, 100nm dem Beschichtungsmaterial zugefügt. Besonders vorteilhaft liegen die Nanopartikel in derartigen Kieselsolen als unvernetzte Einzelpartikel vor. Darüber hinaus ist es auch denkbar, dass derartige Kieselsole neben den Siliziumdioxidpartikeln weitere Nanopartikel aufweisen kann, wie beispielsweise Calciumoxidpartikel und/oder Aluminiumoxidpartikel.

Besonders vorteilhaft hat es sich erwiesen, wenn der Nanopartikelgehalt im Bereich von 0,01-80 Gewichtsprozent, vorteilhafter zwischen 1 und 20 Gewichtsprozent, noch vorteilhafter von 1 Gewichtsprozent, 1,5 Gewichtsprozent, 2 Gewichtsprozent, 2,5 Gewichtsprozent, 3 Gewichtsprozent, 3,5 Gewichtsprozent, 4 Gewichtsprozent, 4,5 Gewichtsprozent, 5 Gewichtsprozent, 5,5 Gewichtsprozent, 6 Gewichtsprozent, 6,5 Gewichtsprozent, 7 Gewichtsprozent, 7,5 Gewichtsprozent, 8 Gewichtsprozent, 8,5 Gewichtsprozent, 9 Gewichtsprozent, 9,5 Gewichtsprozent, 10 Gewichtsprozent, 10,5 Gewichtsprozent, 11 Gewichtsprozent, 11,5 Gewichtsprozent, 12 Gewichtsprozent, 12,5 Gewichtsprozent, 13 Gewichtsprozent, 13,5 Gewichtsprozent, 14 Gewichtsprozent, 14, 5 Gewichtsprozent, 15 Gewichtsprozent, 15,5 Gewichtsprozent, 16 Gewichtsprozent, 16,5 Gewichtsprozent, 17 Gewichtsprozent, 17,5 Gewichtsprozent, 18 Gewichtsprozent, 18,5 Gewichtsprozent, 19 Gewichtsprozent, 19, 5 Gewichtsprozent und 20 Gewichtsprozent bezogen auf die Gesamtmasse des Einstufenbeschichtungsmaterials ausgebildet ist. Dies ist von Vorteil, da bei Verwendung dieser Werte ausreichend dicke und auch besonders kratzfeste Beschichtungsergebnisse mit sehr guten Gleit- und Etikettiereigenschaften erzielt werden können. Unter dieser Angabe ist vorteilhaft das reine Gewicht der Nanopartikel, ohne deren Lösungsmittel und/oder Trägermaterial zu verstehen.

Das Zusetzen dieser anorganischen Nanopartikel hat sich als vorteilhaft erwiesen, da diese Nanopartikel zugleich zur Hydrolyse des wenigstens einen funktionalisierten Silans genutzt werden können, sodass auf den oben ausgeführten möglichen Vorhydrolysierungsschritt bei Zugabe der Nanopartikel verzichtet werden kann. Dies ist beispielsweise bei Verwendung von sauren Kieselsolen möglich. Zugleich ist denkbar, die Nanopartikel, beispielsweise als saure Kieselsole, als Ergänzung der Hydrolysereaktion beizumengen, um so die Reaktionszeit deutlich zu beschleunigen und so eine schnellere Weiterverarbeitung zu ermöglichen. Auf die oben beschriebene zusätzliche Zugabe einer Säure für den Vorhydrolysierungsschritt kann bei Zugabe von sauren Kieselsolen vollständig verzichtet werden.

Bei einer weiteren vorteilhaften Ausführungsform hat es sich als vorteilhaft erwiesen, dass das Einstufenbeschichtungsmaterial mehrere Komponenten aufweist. Es hat sich als vorteilhaft erwiesen, das Einstufenbeschichtungsmaterial als 2-Komponenten-Einstufenbeschichtungsmaterial auszubilden. Es hat sich vorteilhaft gezeigt, zwei zueinander verschieden ausgebildete Komponenten miteinander zu vermischen, um so die Reaktionsfähigkeit während des Applikationsvorgangs als auch die mit der Trocknung resultierende Kratzfestigkeit und Gleitfähigkeit sowie die deutlich verbesserte Etikettierbarkeit zu erhöhen. Selbstverständlich ist die Ausbildung als 2-Komponentenmaterial nicht begrenzend zu verstehen, sodass neben dem wenigstens einen funktionalisierten Silan, welches vorteilhaft in jeder Komponente vorgelegt ist, zusätzliche Zusammensetzungen, wie beispielsweise Säuren, Nanopartikel, Lösungsmittel, Wachsdispersion, Wachsemulsionen, weitere Tenside oder Tensidgemische, in den einzelnen Komponenten enthalten sein können. Vorteilhaft können die beiden Komponenten jeweils wenigstens ein funktionalisiertes Silan oder mehrere funktionalisierte Silane der folgenden Liste aufweisen: Glycidyloxypropyltriethoxysilan, Glycidyloxypropyltrimethoxysilan, Methyltriethoxysilan, Tetraethoxysilan, Vinyltriethoxysilan, Vinyltrimethoxysilan, Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, Aminopropyltriethoxysilan, n-(2-aminoethyl)-3-aminopropyltriethoxysilan, Aminopropyltrimethoxysilan, n-(2-aminoethyl)-3-aminopropyltrimethoxysilan n-Propyltrimethoxysilan, Cyclohexylmethyldimethoxysilan, Dimethyldimethoxysilan, Diisopropyldimethoxysilan, Phenyimethyldimethoxysilan, Phenylethyltriethoxysilan, Phenyltriethoxysilan, Phenylmethyldiethoxysilan und Phenyldimethylethoxysilan, Octyltriethoxysilan, Octyltrimethoxysilan, Hexadecyltrimethoxysilan, Hexadecyltriethoxysilan. Vorteilhaft unterscheiden sich die gewählten funktionalisierten Silane der ersten und zweiten Komponente voneinander. Es werden also vorteilhaft gerade nicht gleich funktionalisierte Silane ausgewählt.

So ist in einer weiteren vorteilhaften Ausführungsform denkbar, dass das wenigstens eine funktionalisierte Silan in der ersten Komponente durch Zugabe von wenigstens einer Säure vorhydrolysiert bereitgestellt ist. Vorteilhaft kann die Vorhydrolysierung beispielsweise durch Zugabe von wenigstens einer Säure und/oder von saurem Kieselsol erfolgen, wie oben bereits ausgeführt. Weiterhin kann die erste Komponente wenigstens ein Tensid aus der oben genannten Liste enthalten. Bei einer weiteren Ausführungsform hat es sich als vorteilhaft erwiesen, dass das wenigstens eine funktionalisierte Silan in der zweiten Komponente, welches sich chemisch von dem wenigstens einen Silan der ersten Komponente unterscheidet, in einer wässrigen Lösung bereitgestellt ist. Weiterhin ist auch hier denkbar, dass die zweite Komponente wenigstens ein Tensid aus der oben genannten Liste enthalten kann. Beide Komponenten können dann in vorbestimmbaren Verhältnissen miteinander vermischt werden und bei Bedarf noch mit wenigstens einem Lösungsmittel, vorteilhaft mit Wasser, verdünnt werden.

So ist beispielsweise denkbar, dass die erste Komponente wenigstens vorhydrolysierte, funktionalisierte Silane sowie wenigstens ein Tensid enthalten kann. Die zweite Komponente kann dann beispielsweise ein funktionalisiertes Silan enthalten, welches unter Temperaturbeaufschlagung im Bereich von 60 °C bis 70 °C, vorteilhaft von 65 °C, mit wenigstens einem Lösungsmittel verdünnt wird. Als besonders vorteilhaftes Lösungsmittel, welches auch als Verdünnungsmittel bezeichnet werden kann, hat sich Wasser, vorteilhafter deionisiertes Wasser, erwiesen.

In einem weiteren Ausführungsbeispiel ist denkbar, dass die ersten Komponente wenigstens vorhydrolysierte, funktionalisierte Silane aufweisen kann. In diesem Ausführungsbeispiel kann dann die zweite Komponente vorteilhaft ein funktionalisiertes Silan sowie wenigstens ein Tensid enthalten, wobei das Gemisch dann unter Temperaturbeaufschlagung im Bereich von 60 °C bis 70 °C, vorteilhaft von 65 °C, mit wenigstens einem Lösungsmittel verdünnt wird. Als besonders vorteilhaftes Lösungsmittel, welches auch als Verdünnungsmittel bezeichnet werden kann, hat sich Wasser, vorteilhafter deionisiertes Wasser, erwiesen.

Folglich kann das wenigstens eine Tensid entweder in der ersten Komponente und/oder in der zweiten Komponente bereitgestellt sein. Werden mehrere funktionalisierte Silane in einer Komponente vorgesehen, so werden diese im einfachsten Fall im Verhältnis 1:1 bezogen auf deren Gewicht ausgewählt. Es ist aber nicht begrenzend zu verstehen, so dass es auch drei funktionalisierte Silane oder auch vier oder fünf die erste Komponente und/oder die zweite Komponente ausbilden. Zur Herstellung des Einstufenbeschichtungsmaterials werden vorteilhaft die beiden Komponenten zunächst getrennt voneinander hergestellt, um dann für die Applikation miteinander vermischt zu werden. Im Rahmen dieses Vermischungsprozessschrittes kann weiterhin noch Lösungsmittel, welches vorteilhaft auch als Verdünnungsmittel verstanden werden kann, zugegeben werden. Als besonders vorteilhaftes Verdünnungsmittel hat sich deionisiertes Wasser erwiesen. Dieses ist kostengünstig beziehbar und stellt für die benutzenden Personen des Einstufenbeschichtungsmaterial kein gesundheitliches Risiko dar. Folglich kann auch von einem Einstufenbeschichtungsmaterial auf Wasserbasis gesprochen werden.

Je nach Art der Zusammensetzung der einzelnen Komponenten sind unterschiedliche Herstellungsschritte zu berücksichtigen. Wird beispielsweise wenigstens ein Tensid in der ersten Komponente mit vorgesehen, wird vorteilhaft zunächst das wenigstens eine funktionalisierte Silan mit einer Säure versetzt, um so die Vorhydrolysierung einzuleiten. Nach ausreichender Reaktionszeit, beispielsweise von mehreren Tagen und zeitgleichem Rühren, kann das wenigstens eine Tensid zugegeben werden. Zur ausreichenden Verteilung in der ersten Komponente hat es sich auch hier als vorteilhaft erwiesen, das Gemisch nochmals für eine vorbestimmbare Zeit zu rühren, beispielsweise 2 Stunden. Die zweite Komponente kann während dieser Zeit hergestellt werden, in dem wenigstens ein funktionalisiertes Silan unter Temperaturbeaufschlagung, beispielsweise 65°C, mit deionisiertem Wasser verdünnt wird. Mit Fertigstellung beider Komponenten werden diese vorteilhaft in vorbestimmbaren Verhältnissen miteinander gemischt. Bei Bedarf kann mit weiterem deionisierten Wasser das resultierende Gemisch verdünnt werden, um schließlich das Einstufenbeschichtungsmaterial zur Applikation bereitzustellen. Wie oben bereits beschrieben ist es auch denkbar, dass wenigstens eine Tensid in der zweiten Komponente bereitzustellen. Hierfür kann dann das Tensid in der ersten Komponente weggelassen werden. Dies ist dennoch selbstverständlich nicht begrenzend sind zu verstehen, so dass es auch denkbar ist, dass sowohl erste als auch zweite Komponente wenigstens ein Tensid enthalten können.

Weiterhin schließt die Erfindung auch Mehrkomponentensysteme ein, welche beispielsweise drei, vier, fünf oder noch mehr Komponenten aufweisen. Das vorbestimmbare Zusammenführen der Komponenten bildet dann wiederrum das Einstufenbeschichtungsmaterial aus.

Vorteilhaft bilden die beiden Komponenten miteinander und/oder mit weiteren Zusatzmitteln vermischt das zum Gebrauch einsetzbare Einstufenbeschichtungsmaterial aus. Selbstverständlich ist dies nicht auf zwei Komponenten begrenzend zu verstehen, so dass auch mehr als zwei Komponenten, wie beispielsweise drei, vier oder fünf Komponenten zur Herstellung des Einstufenbeschichtungsmaterials eingesetzt werden können. In einer besonders vorteilhaften Ausführungsform weist jede Komponente wenigstens ein funktionalisiertes Silan und optional weitere Zusatzstoffe, wie oben ausgeführt, auf.

Im Anwendungsverfahren, insbesondere für Lagerung und Transport des Einstufenbeschichtungsmaterials, hat es sich als vorteilhaft erwiesen, das hier erstmals beschriebene Einstufenbeschichtungsmaterial als Konzentrat auszubilden.

Besonders vorteilhaft weist das Konzentrat einen Wassergehalt von 5-15 Gewichtsprozent bezogen auf die Gesamtmasse des Konzentrats auf. Diese 5-15 Gewichtsprozent reichen für eine Stabilisierung des Einstufenbeschichtungsmaterials aus und verhindern Agglomerationen und ungewünschte Nebenreaktionen.

Soll dann das Einstufenbeschichtungsmaterial benutzt werden, also zum Applizieren vorbereitet werden, so wird das Konzentrat mit wenigstens einem Lösungsmittel verdünnt und ist somit direkt einsatzbereit. Das wenigstens eine Lösungsmittel ist aus der Gruppe Alkohole, Acetate, aprotische Lösungsmittel, polare Lösungsmittel und/oder Kombinationen hieraus ausgewählt. So haben sich beispielsweise Butylglykol, n-Butanol, Wasser, Isooctanol, Octanol, Hexanol, Pentanol, Ethylenglykol, Diethylenglykol, Wasser und dergleichen als besonders vorteilhaft erwiesen, da mit diesen Lösungsmitteln eine schnelle und homogene Emulsion ausgebildet werden kann, welche zeitnah weiter verarbeitet werden kann. Vorteilhaft erfolgt die Weiterverarbeitung direkt nach Durchmischen der Lösungsmittelzugabe. Besonders vorteilhaft hat sich hierbei Wasser als Lösungsmittel erwiesen, welches auch als Verdünnungsmittel bezeichnet werden kann. Dies ist aber nicht begrenzend zu verstehen, so dass es auch denkbar ist, das zur Verarbeitung fertige Einstufenbeschichtungsmaterial nach dem Herstellen des Gebrauchszustands über mehrere Tage oder auch Wochen zu lagern, bevor der Gebrauch, also das Applizieren auf restwarmen Glasoberflächen, erfolgt. Das Einstufenbeschichtungsmaterial ist somit auch im gebrauchsfertigen Zustand lagerfähig.

Dies ist die einfachste Ausführungsform des Einstufenbeschichtungsmaterials. Für die Applikation des Einstufenbeschichtungsmaterials hat es sich als vorteilhaft erwiesen, Konzentrat und Lösungsmittel im Verhältnis von 1:200 bis 10:1, noch vorteilhafter von 1:10 bis 1:99, jeweils bezogen auf die Masse, einzusetzen. Im einfachsten Fall wird das Konzentrat dem Lösungsmittel unter Rühren zugeführt, sodass sich eine Emulsion und/oder eine Dispersion ausbildet. Dies ist von Vorteil, da hierdurch eine besonders leichte und einfache Handhabung des Beschichtungsmaterials in der Praxis sichergestellt wird. Der Maschinenführer kann das vorliegende Beschichtungsmaterial in der gewünschten Konzentration direkt selbst anmischen und dieses entsprechend auf die Glasoberflächen applizieren. Zudem hat sich insbesondere Wasser als Lösungsmittel als vorteilhaft erwiesen, da dieses überall zugänglich ist und keiner besonderen chemischen Kennzeichnungspflicht unterliegt. Somit ist ein weiterer Vorteil für die Gesundheit der Maschinenführer und der Umwelt gegeben.

Wird Wasser als Lösungsmittel gewählt, so wird vorteilhaft ein Mischungsverhältnis von Wasser zu Konzentrat im Bereich von 9:1 bis 199:1 bezogen auf die Masse gewählt. Besonders vorteilhafte Mischungsverhältnisse ergeben sich bei Verhältnissen von 90:10, 90:9, 90:8, 90:7, 90:6, 90:6, 90:5, 90:4, 90:3, 90:2 sowie im Bereich von 95:5 bis 99:1 bezogen auf die Masse. Dann ist eine besonders homogene Emulsion und/oder Dispersion herstellbar, welche auch entsprechend gleichmäßig auf der Glasoberfläche applizierbar ist. Diese kann beispielsweise durch die weitere Zugabe wenigstens eines Tensids, beispielsweise aus der oben aufgeführten Liste, stabilisiert werden.

Schließlich können noch im Konzentrat Kondensationskatalysatoren enthalten und/oder nach Herstellung der Emulsion Kondensationskatalysatoren zugeben werden, beispielsweise Aluminiumalkoxide, Titanalkoxide, Zirkonalkoxide, Phosphorsäureester, weitere Säureester und/oder Kombinationen hieraus. Besonders vorteilhaft haben sich hierbei Zugaben von bis zu 5 Gew-% bezogen auf die Masse des Beschichtungsmaterials gezeigt. Besonders stabile Beschichtungen konnten mit 0,5-1 Gew.% bezogen auf die Masse des Beschichtungsmaterials erzeugt werden.

Weiterhin ist denkbar, dass zusätzlich wasser- oder lösungsmittelbasierte Wachsemulsionen und/oder Alkydharzemulsionen und/oder Wachsdispersionen und/oder Alkydharzdispersionen und/oder Mischungen hieraus eingerührt werden können. So können beispielsweise 0-30 Gew.% bezogen auf die Masse des Beschichtungsmaterials zugesetzt sein. Diese Emulsionen und/oder Dispersionen erweisen sich als vorteilhaft für die Verbesserung der Kratzfestigkeit der zu erzeugenden Beschichtung. Vorteilhafte Beispiele hierfür sind Wachsdispersionen auf Polyethylenbasis und/oder HD-Polyethylenbasis, welche beide optional auch oxidiert sein können.

Darüber hinaus ist es auch noch denkbar, dass für die Vorbereitung des Beschichtungsmaterials Nanopartikel und/oder wenigstens ein Tensid und/oder wenigstens eine Säure dem Konzentrat zugegeben wird, um die Reaktivität zu steigern und oder die Hydrolyse zu initiieren. Folglich können Nanopartikel und Säure auch als Initiatoren bezeichnet werden.

Darüber hinaus kann das Einstufenbeschichtungsmaterial weiterhin Naturstoffe enthalten. Diese Naturstoffe können Polysaccharide, Polyaminosaccharide, substituierte Polysaccharide und/oder Proteine, wie beispielsweise Cellulose, Chitosan, Cellulose, Stärke, Casein usw. sein. Die Zugabe der Naturstoffe ist für die Oberflächenausbildung der resultierenden Beschichtung von Vorteil. Diese wird dadurch stabiler.

Das Einstufenbeschichtungsmaterial ist thermisch aushärtend ausgebildet. Besonders vorteilhaft ist das Einstufenbeschichtungsmaterial ausschließlich thermisch aushärtend ausgebildet. Dies ist von Vorteil, da für eine stabile und gleichmäßige Vergütung aus dem Einstufenbeschichtungsmaterial die Restwärme der kurz zuvor hergestellten Behältergläser ausgenutzt wird. Dies Restwärme der Behältergläser, insbesondere Glasflaschen, reicht für die Ausbildung stabiler und langlebiger Vergütungen aus. Es kann daher insbesondere auf freie Radikale und zusätzliche Vernetzungsmittel in dem Einstufenbeschichtungsmaterial vollständig verzichtet werden, da das hier beschriebene Einstufenbeschichtungsmaterial gerade nicht mittels UV-Strahlung vernetzt werden kann. Auch ein Tempern nach Aufbringung des Einstufenbeschichtungsmaterials ist nicht notwendig. Folglich wird ein besonders einfach zu verarbeitendes Einstufenbeschichtungsmaterial bereitgestellt, welches ohne Zwischenschritte wie UV-Vernetzung, Tempern oder dergleichen thermisch aushärtet und auch so zu verwenden ist. Die Vergütung, also das Einstufenbeschichtungsmaterial, kann somit schnell auf die Behältergläser aufgebracht werden, thermisch aufgrund der Restwärme der Behältergläser aushärten und diese können im Anschluss direkt der Verpackungseinheit zugeführt werden. Besonders vorteilhaft hat es sich hierbei erwiesen, dass das Einstufenbeschichtungsmaterial thermisch härtend ausgebildet ist und hierzu Oberflächentemperaturen bis max. 200 °C ausreichen, um stabile, gleitfähige, kratzfeste und hervorragend etikettierbare Vergütungen auszubilden.

Weiterhin betrifft die vorliegende Erfindung ein Verfahren zur Herstellung eines Einstufenbeschichtungsmaterials für heißendvergütungsfreie Behälterglasoberflächen wenigstens die folgenden Schritte aufweisend:
**a.** Bereitstellen wenigstens eines funktionalisierten Silans aus der Gruppe Glycidyloxypropyltriethoxysilan, Glycidyloxypropyltrimethoxysilan, Methyltriethoxysilan, Tetraethoxysilan, Vinyltriethoxysilan, Vinyltrimethoxysilan, Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, Aminopropyltriethoxysilan, n-(2-aminoethyl)-3-aminopropyltriethoxysilan, Aminopropyltrimethoxysilan, n-(2-aminoethyl)-3-aminopropyltrimethoxysilan n-Propyltrimethoxysilan, Cyclohexylmethyldimethoxysilan, Dimethyldimethoxysilan, Diisopropyldimethoxysilan, Phenyldimethyldimethoxysilan, Phenylethyltriethoxysilan, Phenyltriethoxysilan, Phenylmethyldiethoxysilan und Phenyldimethylethoxysilan, Octyltriethoxysilan, Phenyltriethoxysilan, Octyltrimethoxysilan, Hexadecyltrimethoxysilan, Hexadecyltriethoxysilan und/oder Kombinationen hieraus;
**b.** Vermischen des wenigstens einen funktionalisierten Silans mit wenigstens einer Säure zum Vorhydrolysieren und/oder mit wenigstens einem Tensid und/oder mit wenigstens einem Lösungsmittel; sowie
**c.** Verdünnen des entstandenen Gemisches mit wenigstens einem Lösungsmittel.

Insbesondere durch den letzten Verfahrensschritt c. wird ein Einstufenbeschichtungsmaterial auf Wasserbasis hergestellt. Dies ist besonders von Vorteil, wenn deionisiertes Wasser hierzu verwendet wird, da dieses keine den Benetzungsprozess behindernden Ionen aufweist.

Weiterhin können mehrere Komponenten zur Herstellung des Einstufenbeschichtungsmaterials vorgelegt werden. Vorteilhaft kann wenigstens eine Komponente zur Herstellung des Einstufenbeschichtungsmaterials, vorteilhaft alle Komponenten, wenigstens ein funktionalisiertes Silan enthalten. Darüber hinaus können in jeder Komponente weitere Mittel vorgelegt werden, wie in Schritt b. ausgeführt. Je nach Anwendungsfall und in Abhängigkeit des wenigstens einen vorgelegten funktionalisierten Silans können Säurezugabe und/oder Tensidzugabe und/oder Lösungsmittelzugabe variieren.

Weiterhin betrifft die vorliegende Erfindung ein Behälterglas, beispielsweise eine Flasche oder ein Glas zur Aufnahme von Lebensmitteln, welches mit dem hier beschriebenen Einstufenbeschichtungsmaterial beschichtet ist. Hierbei weist das Behälterglas gerade keine übliche Heißendvergütung auf. Das Einstufenbeschichtungsmaterial wird direkt auf die frische, unbehandelte und lediglich abgekühlte Behälterglasoberfläche appliziert. Die Applikation kann im einfachsten Fall durch Sprühen des Einstufenbeschichtungsmaterials durchgeführt werden. Dies ist selbstverständlich nicht begrenzend zu verstehen, sodass es auch denkbar ist, die Applikation durch Tauchen, Streichen oder dergleichen aufzubringen. Unter abgekühlt ist hierbei zu verstehen, dass die durch den Produktionsprozess bedingte Restwärme der Behältergläser ausgenutzt wird und auch ausreicht, damit das Einstufenbeschichtungsmaterial thermisch aushärtet. Hierdurch werden kostengünstig, einfach und schnell vergütete Behältergläser bereitgestellt. Vorteilhaft weisen die Behältergläser bei dem Applizieren des Einstufenbeschichtungsmaterials maximal noch Temperaturen von 200°C auf.

Weiterhin betrifft die vorliegende Erfindung die Verwendung des hier erstmals beschriebenen Beschichtungsmaterials als Einstufenoberflächenvergütung von Glas, insbesondere Behälterglas, welches heißendvergütungsfrei ausgebildet ist. Die Verwendung des Einstufenbeschichtungsmaterials ist hierbei nicht auf Behälterglas beschränkt zu sehen. So hat es sich bereits gezeigt, dass das hier beschriebene Einstufenbeschichtungsmaterial ebenfalls zur Beschichtung von anderen Gläsern, Keramik, Steingut, Porzellan oder auch Kunststoff verwendet werden kann. Auch auf diesen Oberflächen werden insbesondere homogene, kratzfeste, gleitfähige Beschichtungen ausgebildet.

Schließlich betrifft die vorliegende Erfindung auch ein Verfahren zum Herstellen von einstufig vergüteten Behälterglasoberflächen, welches wenigstens den Schritt aufweist, dass auf unbehandelte Behältergläser, welche heißendvergütungsfreie ausgebildet sind, das hier beschriebene Einstufenbeschichtungsmaterial appliziert wird. Besonders vorteilhaft erfolgt die Applikation bei einem Oberflächentemperaturbereich von 20°C-200°C, vorteilhafter in einem Bereich von 65°C-120°C, noch vorteilhafter von 80°C ± 8°C und/oder von 100°C ± 8°C und/oder von 130°C ± 8°C. Insbesondere bei Oberflächentemperaturen um die 80°C und/oder um die 100°C und/oder um die 130°C, mit der hier genannten Abweichung von ±8°C, zeigt das Einstufenoberflächenmaterial die besten Spreiteigenschaften auf der Behälterglasoberfläche, sodass eine gleichmäßige Homogenität und Defektfreiheit der resultierenden Beschichtungsschicht sichergestellt werden kann. Zudem ist die Restwärme des Behälterglases aus dem Produktionsprozess von 80°C ± 8°C und/oder von 100°C ± 8°C und/oder von 130°C ± 8°C genau richtig, um die Trockungsgeschwindigkeit und/oder Vernetzungsgeschwindigkeit des applizierten Einstufenbeschichtungsmaterials mit den Spreiteigenschaften des Einstufenbeschichtungsmaterials bei diesen Temperaturen zu kombinieren. So ist eine besonders gleichmäßige Trocknung und somit auch eine gleichmäßige Oberflächenvergütung zu erzielen, ohne dass unvergütete oder zu dick vergütete Außenoberflächenbereiche erzeugt werden. Hierbei gilt zu berücksichtigen, dass bei Aufsprühen des Einstufenbeschichtungsmaterials von oben her auf die Behältergläser der Behälterglasboden, auf welchem die Behältergläser transportiert werden, einstufenbeschichtungsmaterialfrei und auch Teile des von den Behältergläsern aufgespannten Innenraumvolumens zur Aufnahme von Lebensmitteln einstufenbeschichtungsmaterialfrei verbleiben können.

Besonders vorteilhaft ist das hier beschriebene Einstufenbeschichtungsmaterial in jeder der genannten Ausführungen oder auch in Kombinationen hieraus, in herkömmlichen Kaltendvergütungsanlagen für Behälterglas einsetzbar, ohne dass die Anlagen oder Linien zeitaufwändig umgebaut werden müssen. Somit können Produktionsausfälle ebenfalls verhindert werden. Besonders vorteilhaft wird das Einstufenbeschichtungsmaterial auf die Behältergläser von oben her und/oder seitlich aufgesprüht.

Es folgen nunmehr Ausführungsbeispiele. Diese sind, sofern nicht anders nagegeben, bei Raumtemperatur, durchgeführt.

### Beispiel 1

10g Hexadecyltrimethoxysilan und 10g Octyltrimethoxysilan werden gemischt und unter Rühren mit 10g 5%iger H₂SO₄ versetzt. Nach 2h Rühren gibt man dem weißlichen Hydrolysat 10g Emulan®OP25 zu und rührt weitere 2h. 10g dieses Konzentrates wird unter starkem Rühren mit 90g deionisiertem Wasser bei einer Wassertemperatur von 65C° versetzt. Es resultiert eine weißliche Emulsion. Nach Sprühapplikation der Emulsion auf eine auf 100°C vorgewärmte Glasflasche erhält man eine abriebfeste transparente Beschichtung.

### Beispiel 2

10g Methyltrimethoxysilan und 10g Phenyltrimethoxysilan werden gemischt und unter Rühren mit 10g 5%iger Ameisensäure versetzt. Nach 2h Rühren gibt man dem klaren Hydrolysat 10g Borchi®Gen0650 zu und rührt weitere 2h. 10g dieses Konzentrates wird unter starkem Rühren mit 90g deionisiertem Wasser bei einer Wassertemperatur von 65C° versetzt. Es resultiert eine weißliche Emulsion. Nach Sprühapplikation der Emulsion auf eine auf 100°C vorgewärmte Glasflasche erhält man eine abriebfeste transparente Beschichtung.

### Beispiel 3

7g Octyltriethoxysilan, 7g Phenyltriethoxysilan und 7g Propyltriacetoxysilan werden gemischt und unter Rühren mit 15g Wasser versetzt. Nach 2h Rühren gibt man dem klaren Hydrolysat 10g Sermul®EA266 zu und rührt weitere 2h. 10g dieses Konzentrates wird unter starkem Rühren mit 90g deionisiertem Wasser bei einer Wassertemperatur von 65C° versetzt. Es resultiert eine weißliche Emulsion. Nach Sprühapplikation der Emulsion auf eine auf 100°C vorgewärmte Glasflasche erhält man eine abriebfeste transparente Beschichtung.

### Beispiel 4

20g Phenyltrimethoxysilan wird unter Rühren mit 5g 5%iger HCl versetzt. Nach 20min Rühren gibt man dem klaren Hydrolysat 2g Byk348 zu und rührt weitere 10min. Das klare Hydrolysat wird mit 30g Oktanol verdünnt. 5g dieses Konzentrates wird unter starken Rühren mit 90g deionisiertem Wasser versetzt. Es resultiert eine weißliche Emulsion. Nach Sprühapplikation der Emulsion auf eine auf 100°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

### Beispiel 5

20g Octyltrimethoxysilan wird unter Rühren mit 2g 5%iger HCl versetzt und danach mit 5g Kieselsol Köstrosol®HB50K. Nach 2h Rühren gibt man dem klaren Hydrolysat 2g Genapol®PF80 zu und rührt weitere 10min. Das klare Hydrolysat wird mit 5g einer Wachsemulsion versetzt. 5g dieses Konzentrates wird unter starken Rühren mit 90g deionisiertem Wasser versetzt. Es resultiert eine weißliche Emulsion. Nach Sprühapplikation der Emulsion auf eine auf 130°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

### Beispiel 6

20g Octyltrimethoxysilan wird unter Rühren mit 2g 5%iger HCl versetzt und danach werden 5g Kieselsol Köstrosol®AD0820 zugeführt. Nach 2h Rühren gibt man dem klaren Hydrolysat 2g Genapol®PF80 zu und rührt weitere 10min. Das klare Hydrolysat wird mit 5g einer Wachsdispersion Ceramat258 versetzt. 5g des somit entstandenen Konzentrates wird unter starkem Rühren mit 90g deionisiertem Wasser versetzt. Es resultiert eine weißliche Emulsion. Nach Sprühapplikation der Emulsion auf eine auf 130°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

### Beispiel 7

1g Chitosan wird in 99g einer 10%igen Essigsäure unter Rühren gelöst. 20g Glycidyloxipropyltriethoxysilan wird unter Rühren mit 2g 5%iger Essigsäure versetzt und 12h gerührt. Danach werden 10g der Chitosanlösung zugeführt und weitere 12h gerührt.5g des somit entstandenen Konzentrates wird unter starkem Rühren mit 90g deionisiertem Wasser versetzt. Es resultiert eine klare Flüssigkeit. Nach Sprühapplikation der Lösung auf eine auf 130°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

### Beispiel 8

Komponente 1: 7g Octyltriethoxysilan, 7g Phenyltriethoxysilan und 5g Glycidyloxipropyltriethoxysilan werden gemischt und unter Rühren mit 15g 1 %ige HCl versetzt und 8 Tage gerührt. Danach gibt man dem klaren Hydrolysat 0,5g Sermul®EA266 zu und rührt weitere 2h.

Komponente 2: 2 g 3-Aminopropyltriethoxasilan werden in 90 g Wasser deionisiertem Wasser bei einer Wassertemperatur von 65C° versetzt.

Zu 10g Komponente 2 werden unter starkem rühren 0,5 g Komponente 1 eingerührt. Es resultiert eine weißliche Emulsion. Nach Sprühapplikation der Emulsion auf eine auf 100°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

### Beispiel 9

Komponente 1: 7g Octyltriethoxysilan und 7g Glycidyloxipropyltriethoxysilan werden gemischt und unter Rühren mit 5g 1 %ige HCl versetzt und 8 Tage gerührt.

Komponente 2: 2 g 3-Aminopropyltriethoxasilan und 1 g Genapol® X-080 (CAS Number 9043-30-5) werden in 90 g Wasser deionisiertem Wasser bei einer Wassertemperatur von 65C° versetzt.

Zu 10g Komponente 2 werden unter starkem rühren 0,5 g Komponente 1 eingerührt. Es resultiert eine weißliche Emulsion. Nach Sprühapplikation der Emulsion auf eine auf 100°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

### Beispiel 10

20g Glycidyloxipropyltriethoxysilan wird unter Rühren mit 2,5g 1%iger Schwefelsäure versetzt und 12h gerührt. 5g des somit entstandenen Konzentrates wird unter starkem Rühren mit 90g deionisiertem Wasser versetzt. Es resultiert eine klare Flüssigkeit. Nach Sprühapplikation der Lösung auf eine auf 130°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

### Beispiel 11

20g Glycidyloxipropyltriethoxysilan wird unter Rühren mit 2,5g 1%iger Schwefelsäure und 0,05g Byk348 versetzt und 12h gerührt. 5g des somit entstandenen Konzentrates wird unter starkem Rühren mit 90g deionisiertem Wasser versetzt. Es resultiert eine klare Flüssigkeit. Nach Sprühapplikation der Lösung auf eine auf 130°C vorgewärmte Glasflasche erhält man eine abriebfeste transparente Beschichtung. Die Haftung üblicher Etikettenkleber, wie Caseinkleber, Stärkekleber und/oder Dextrinkleber, ist sehr gut auf der beschichteten Glasfläche.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen. Insbesondere beschränkt sich die Erfindung nicht auf die nachfolgend angegebenen Merkmalskombinationen, sondern es können auch für den Fachmann offensichtlich ausführbare andere Kombinationen und Teilkombinationen aus den offenbarten Merkmalen gebildet werden.

## Patentansprüche

1. Einstufenbeschichtungsmaterial für heißendvergütungsfreie Behälterglasoberflächen, enthaltend wenigstens ein einfach- und/oder mehrfachfunktionalisiertes Silan, welches aus der Gruppe Glycidyloxypropyltriethoxysilan, Glycidyloxypropyltrimethoxysilan, Methyltriethoxysilan, Tetraethoxysilan, Vinyltriethoxysilan, Vinyltrimethoxysilan, Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, Aminopropyltriethoxysilan, n-(2-aminoethyl)-3-aminopropyltriethoxysilan, Aminopropyltrimethoxysilan, n-(2-aminoethyl)-3-aminopropyltrimethoxysilan n-Propyltrimethoxysilan, Cyclohexylmethyldimethoxysilan, Dimethyldimethoxysilan, Diisopropyldimethoxysilan, Phenylimethyldimethoxysilan, Phenylethyltriethoxysilan, Phenyltriethoxysilan, Phenylmethyldiethoxysilan und Phenyldimethylethoxysilan, Octyltriethoxysilan, Phenyltriethoxysilan, Octyltrimethoxysilan, Hexadecyltrimethoxysilan, Hexadecyltriethoxysilan und/oder Kombinationen hieraus ausgewählt ist.

2. Einstufenbeschichtungsmaterial für heißendvergütungsfreie Behälterglasoberflächen nach Anspruch 1, weiterhin wenigstens ein Tensid enthaltend.

3. Einstufenbeschichtungsmaterial nach Anspruch 1, enthaltend zusätzlich und/oder alternativ zu dem wenigstens einen funktionionalisierten Silan, wenigstens ein Silanacetat.

4. Einstufenbeschichtungsmaterial nach wenigstens einem der vorangegangenen Ansprüche,
**dadurch gekennzeichnet, dass**
das wenigstens eine funktionalisierte Silan und/oder wenigstens eine Silanacetat vorhydrolysiert ist.

5. Einstufenbeschichtungsmaterial nach Anspruch 1 enthaltend weiterhin Nanopartikel.

6. Einstufenbeschichtungsmaterial nach Anspruch 1,
**dadurch gekennzeichnet, dass**
dieses als 2-Komponenten-Einstufenbeschichtungsmaterial ausgebildet ist.

7. Einstufenbeschichtungsmaterial nach Anspruch 6, mit einer ersten Komponente enthaltend wenigstens zwei oder mehrere funktionalisierte Silane, welche durch Zugabe wenigstens einer Säure vorhydrolysiert sind.

8. Einstufenbeschichtungsmaterial nach Anspruch 6, mit einer zweiten Komponente enthaltend wenigstens ein weiteres funktionalisiertes Silan, welches sich chemisch von den Silanen der ersten Komponente unterscheidet und welches in einer wässrigen Lösung bereitgestellt ist.

9. Einstufenbeschichtungsmaterial nach wenigstens einem der vorgenannten Ansprüche,
**dadurch gekennzeichnet, dass**
dieses als wässrige Emulsion ausgebildet ist.

10. Verfahren zur Herstellung eines Einstufenbeschichtungsmaterials für heißendvergütungsfreie Behälterglasoberflächen nach Anspruch 1 wenigstens die folgenden Schritte aufweisend:
**a.** Bereitstellen wenigstens eines funktionalisierten Silans aus der Gruppe Glycidyloxypropyltriethoxysilan, Glycidyloxypropyltrimethoxysilan, Methyltriethoxysilan, Tetraethoxysilan, Vinyltriethoxysilan, Vinyltrimethoxysilan, Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, Aminopropyltriethoxysilan, n-(2-aminoethyl)-3-aminopropyltriethoxysilan, Aminopropyltrimethoxysilan, n-(2-aminoethyl)-3-aminopropyltrimethoxysilan n-Propyltrimethoxysilan, Cyclohexylmethyldimethoxysilan, Dimethyldimethoxysilan, Diisopropyldimethoxysilan, Phenylimethyldimethoxysilan, Phenylethyltriethoxysilan, Phenyltriethoxysilan, Phenylmethyldiethoxysilan und Phenyldimethylethoxysilan, Octyltriethoxysilan, Phenyltriethoxysilan, Octyltrimethoxysilan, Hexadecyltrimethoxysilan, Hexadecyltriethoxysilan und/oder Kombinationen hieraus;
**b.** Vermischen des wenigstens einen funktionalisierten Silans mit wenigstens einer Säure zum Vorhydrolysieren und/oder wenigstens einem Tensid und/oder wenigstens einem Lösungsmittel; und
**c.** Verdünnen des entstandenen Gemisches mit wenigstens einem Lösungsmittel.

11. Glasoberfläche mit dem Einstufenbeschichtungsmaterial nach wenigstens einem der vorgenannten Ansprüche.

12. Glaswaren, Keramikwaren, Steingutwaren, Porzellanwaren oder Kunststoffwaren mit dem Einstufenbeschichtungsmaterial nach wenigstens einem der vorgenannten Ansprüche.

13. Verfahren zum Herstellen von einstufigvergüteten Glasoberflächen, wenigstens den Schritt aufweisend, dass auf heißendvergütungsfreie Glasoberflächen das Einstufenbeschichtungsmaterial nach wenigstens einem der vorangegangenen Ansprüche bei einer Glasflächentemperatur im Bereich von 20°C bis 200 °C nach wenigstens einem der Ansprüche 1 bis 9 appliziert wird.

14. Verfahren nach Anspruch 13, **gekennzeichnet durch** das Aufbringen des Einstufenbeschichtungsmaterial auf heißendvergütungsfreie Gläser bei einer Glasflächentemperatur im Bereich von 20°C bis 200 °C.

15. Verwendung des Einstufenbeschichtungsmaterial nach wenigstens einem der vorangegangenen Ansprüche als Einstufenoberflächenvergütung von heißendvergütungsfreiem Behälterglas, als Oberflächenvergütung von Haushaltswaren und/oder als Oberflächenvergütung von Glaswaren, Keramikwaren, Steingutwaren, Porzellanwaren, Kunststoffwaren.
